# EUROPEAN PATENT SPECIFICATION

(11) **EP 3 539 404 B1**
(45) Date of publication and mention of the grant of the patent: **25.11.2020**
(21) Application number: 19163230.6
(22) Date of filing: 15.03.2019
(51) Int. Cl.: A43B 21/26, B29D 35/00, B29D 35/02, B29D 35/12, A43B 13/18

(54) **SOLE FOR A SHOE, MOULD AND METHOD FOR PRODUCING SAME**
SOHLE FÜR EINEN SCHUH, FORM UND VERFAHREN ZUR HERSTELLUNG DAVON
SEMELLE POUR CHAUSSURE, MOULE ET SON PROCÉDÉ DE PRODUCTION

(30) Priority: 15.03.2018 IT 201800003604
(43) Date of publication of application: 18.09.2019
(73) Proprietor: BLUE RIBE S.r.l., 35010 Saletto di Vigodarzere (PD) (IT)
(72) Inventor: CABRELE, Carlo, 35010 Vigodarzere (PD) (IT)
(74) Representative: Locas, Davide

(56) References cited:
- WO-A1-2006/125631
- KR-A- 20020 007 262
- US-A1- 2004 237 346
- US-A1- 2008 168 684
- US-A1- 2011 162 232

## Description

### Technical field

The present invention relates to a sole for a shoe and a method for producing same that have the features set out in the preamble of the independent claims.

### Technological background

The use of moulds in order to produce soles made of polymeric material is known in the footwear sector.

Typically, these moulds are injected with material, for example EVA or polyurethanes, in order to obtain the properties of the desired soles.

In various footwear sectors, and in particular in the hospital sector, shoes are used which can be easily washed and which can provide comfort even over prolonged periods of use.

In fact, it is interesting to note that, in these sectors, specific inserts are placed in the heel region in order to, as far as possible, prevent or reduce the transfer of stress or trauma during walking which can affect not only the feet but also the legs and back.

US2011162232 A1 discloses a sole structure having an insert member (4) positioned between an outsole (31) and a midsole, and a cage portion (410) positioned at a heel region of a user's foot. The cage portion has a cavity accommodating a cushion member made of a gel material, elastomeric material or impact resistant material, and the midsole has a cavity in which the cushion member is insertable.

TV2011A000043 discloses a method for producing shoes, in particular for hospital use.

More specifically, this method includes using a mould for polymeric material that is rotated by 90° with respect to an underlying plane, injecting the plastics material known as EVA into the mould, extracting the EVA material and, during the cooling steps which cause the material to spontaneously contract, coupling to an insert to complete the shoe.

However, this technical solution does not give the insert a high degree of stability inside the shoe.

In fact, it is possible for the insert to come out of its seat (even only in part) as a result of pressures parallel to the main axis of said insert, thereby immediately creating a condition of possible imbalance and/or reduced comfort of use.

Although small notches can be made in the insert, which notches weakly engage corresponding internal projections of the sole, this solution is limited in that the insert has to necessarily be able to slide completely inside the seat in order to be able to be correctly positioned.

It would therefore be preferable to be able to have a sole for a shoe that could comprise an insert that is more stably connected inside the seat thereof.

Moreover, in certain sectors, for example the hospital sector, this solution would be particularly valued given the high number of hours which staff typically have to spend on their feet.

It would be even more useful for the insert to have antistatic properties so as to be able to meet the most recent safety requirements imposed by standards maintained in the hospital environment.

### Description of the invention

The aim of the present invention is that of providing a sole for a shoe and a method for producing same that are structurally and functionally designed to overcome, at least in part, one of the disadvantages of the prior art.

Within this aim, one objective is that of providing a sole for a shoe according to independent claim 1.

In so doing it is possible to stably constrain the insert inside the seat, thereby preventing or reducing the possibility of the insert coming out of the seat during use.

It is also evident that, while the sole is being worn by a user, the foot itself of the user prevents the insert from being able to come out of the seat in the vertical direction, it being the weight of the user which prevents this from happening.

In this way, the insert can be extracted from the sole only during a phase in which it is not being used by a user and by applying forces oriented in specific directions.

As a result of this technical solution it is possible to guarantee greater safety of the sole and therefore of the shoe intended to house said sole, it being possible to easily replace the insert by simply applying manual pressure. More particularly, in order to extract and disengage the insert from the sole, a force should be applied that is oriented upwards together with a rotation of the insert with respect to the seat along a predetermined axis of rotation, preferably in parallel with the main longitudinal axis of the sole.

The insert comprises a second projection that projects out of the central portion in a direction that is parallel to the vertical axis and in a direction oriented towards the tread when the insert is housed inside the seat.

The seat comprises a lower hole which extends from the upper entry hole towards the tread until it intersects the tread and which is shaped so as to engagingly receive the second projection when the insert is housed inside the seat.

As a result of this technical solution it is possible to further increase the engagement between the insert and the seat of the central body of the sole, thereby improving the safety of the sole itself.

This design also allows an insert to be produced which can be easily removed by the user (when not in use) by applying an extraction force in the directions described above.

The central portion and the second projection extend so as to reinstate the upper surface and/or the tread, respectively.

In this way, it is possible to produce an insert which has increased comfort of use for the user and which allows some properties to be transferred over the entire thickness of the central body (softness, sound absorption, thermal insulation, etc.).

Moreover, this condition is necessary if an antistatic sole that complies with the various national and international standards is desired.

As a result of this design, in fact, it is possible to create continuous and stable contact between the foot of the user (when the sole is in use) and the ground, thereby allowing any electrical currents passing through the body of the user to discharge to earth.

In this way it is also possible to prevent points of height differences or projection with respect to the upper surface on which the foot of the user rests while the product is being worn from being formed above, thereby preventing specific and undesired points of greater wear.

Similarly, when the second projection extends so as to reinstate the surface of the tread, the possibility is reduced of there being projections which would be excessively worn down during the use phases or indentations which would allow undesired material to gather on the inside.

The transverse hole preferably extends until it intersects a lateral surface of the sole and the first projection of the insert extends so as to reinstate the lateral surface.

As a result of this technical solution it is possible to prevent the presence both of projections and cavities with respect to the lateral surface which would identify points of wear and undesired material accumulation inside the central body.

Moreover, in this way it is possible to put identification logos or symbols on the surface of the insert so as to reinstate the lateral surface, which logos or symbols can be easily seen even when the sole is being used by a user.

This technical solution allows various information to be rapidly and effectively communicated which includes, for example, the manufacturer, the type of shoe, the type of insert, any specific requirements with which the insert/shoe complies, etc.

According to one embodiment, at least one of the upper entry hole, lower hole, transverse hole, central portion, first projection, second projection and contact element have rounded edges suitable for allowing or facilitating contacting parts to rotate relative to one another.

At least one of the contact element and first projection advantageously have rounded edges.

In so doing, it is possible to move and/or rotate the insert with respect to the seat more effectively, thereby allowing a user to use and potentially replace said insert.

The insert is made of antistatic material.

In so doing, in particular in the case in which the second projection and the central portion reinstate the tread surface and the upper surface, it is possible to produce an effective sole which comprises an antistatic insert that is able to connect the foot of the user to the ground, thereby preventing unpleasant and dangerous conditions of excess electrostatic charges.

A mould for moulding a semi-finished main body of a sole, not part of the present invention, the mould comprising a first upper mould half including a pair of upper casting moulds for the semi-finished main body. Each casting mould preferably comprises an upper contact surface suitable for defining an upper surface of a semi-finished central body, a first element projecting out of the upper contact surface and suitable for defining an upper entry hole in the semi-finished main body, and a second element, smaller in volume than the first element, projecting out of the first element in a direction that is perpendicular to the upper contact surface.

The second element advantageously has the main extent thereof oriented in a direction that is transverse with respect to a vertical axis and normal to the upper contact surface. According to one embodiment, the second element extends, in the transverse direction, further than the first element. The mould preferably comprises a second lower mould half including a pair of lower casting moulds for the semi-finished main body of a sole, each casting mould comprising a lower contact surface suitable for defining a tread of the semi-finished central body, and a third element projecting out of the lower contact surface and suitable for defining a lower hole, connected to the upper entry hole in the semi-finished main body.

As a result of this technical solution it is possible to produce a mould which allows the main body according to the present disclosure to be obtained rapidly and effectively.

The operating modes for producing the inventions according to the present invention will become clearer from the process for producing a sole having at least one of the preceding claimed features, described in the following, the process comprising
a. preparing a mould for the semi-finished central body of a sole, the mould comprising a first mould half and a second mould half, and injecting fluid or semi-solid plastics material into the mould,
b. opening the mould and extracting, while hot, a polymeric semi-finished main body which has been thus obtained and comprises a seat which in turn includes an upper entry hole and a transverse hole that are interconnected and define a contact element of the semi-finished main body at the connection thereof,
c. preferably waiting for the semi-finished product to expand at maximum up to approximately 170% of the extraction size and identifying a main axis oriented in a toe-to-heel direction of the semi-finished product and a vertical axis that is perpendicular to the main axis,
d. inserting in the semi-finished product, in a transverse direction inclined with respect to the vertical axis at an insertion angle, a first portion of a casting mould into the upper entry hole and the transverse hole so as to contact the contact element,
e. coupling, by applying a pressure in a direction that is parallel to the vertical axis and directed towards a tread of the semi-finished central body, the casting mould into the seat so as to rotate said casting mould about the contact element at an angle that is complementary to the insertion angle,
f. waiting for the semi-finished main body which is coupled to the casting mould to cool,
g. extracting the casting mould while cold by applying the insertion steps d. and e. described above in reverse,
h. inserting, in the transverse direction I described in step d., a first projection of an insert into the upper entry hole and the transverse hole so as to bring a central portion into contact with the contact element,
i. coupling, by applying a pressure in a direction described in step e., the insert into the seat by rotating said insert about the contact element at an angle that is complementary to said angle so as to bring the first projection and second projection to reinstate continuity of the lateral surface and the tread to obtain the sole.

As a result of this technical solution it is possible to carry out a process for producing the sole according to the present invention by coupling the insert to the main body in a very stable manner and ensuring higher safety of the sole formed in this way.

The claimed process also allows various thermal and dimensional variations of the various pieces to be taken into account and allows a sole to be produced which does not sustain damage linked to uneven withdrawals or deformations.

According to one embodiment, the fluid or semi-solid plastics material injected into the mould is EVA.

This technical solution allows the aforementioned process to be carried out very effectively, efficiently producing a sole that is comfortable and functional for the needs of the user.

The semi-finished central body preferably expands at a maximum up to approximately 130% of the extraction size.

In so doing, the dimensional variations produced during the various heating, injection and cooling phases of the process are monitored and optimised in order to obtain an optimum and reliable final product. This condition, moreover, indicates an ideal balance between the features of deformability and comfort of use together with the practicality of defining a simple final formation phase by means of contracting in the cooling phase.

### Brief description of the drawings

The features and advantages of the present invention will become clearer from the detailed description of a preferred embodiment thereof, shown by way of non-restrictive example and with reference to the accompanying drawings, in which:
- Fig. 1 is a perspective view of a semi-finished main body of a sole for a shoe, produced in accordance with the present invention,
- Fig. 2 is a detailed perspective view of the semi-finished main body in Fig. 1,
- Fig. 3 is a front view of an insert to be inserted in the semi-finished main body in Fig. 1,
- Fig. 4 is a perspective view of a step of inserting the insert in Fig. 3 into the semi-finished main body in Fig. 1,
- Fig. 5 is a detailed perspective view of the sole produced according to the present invention,
- Fig. 6 is a perspective view of a mould for producing the semi-finished main body in Fig. 1,

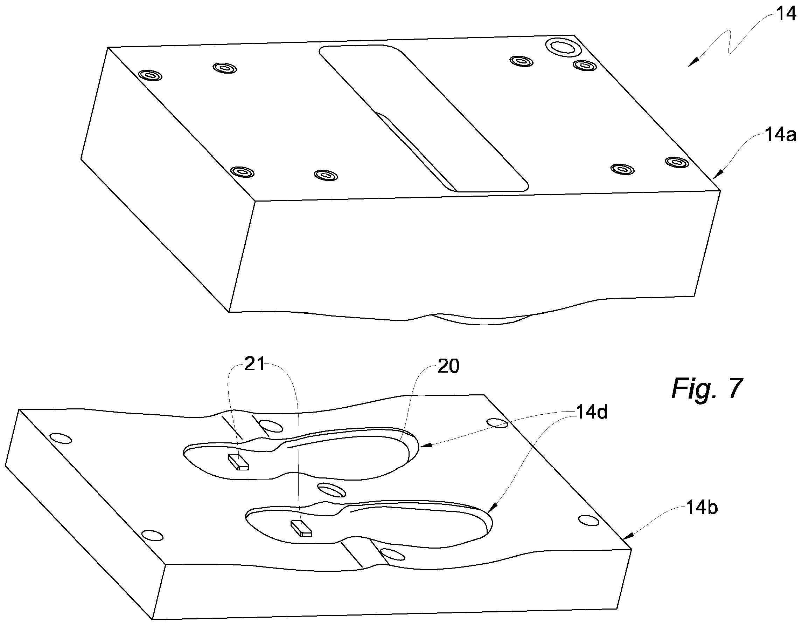

- Fig. 7 is a further perspective view of the mould in Fig. 6,

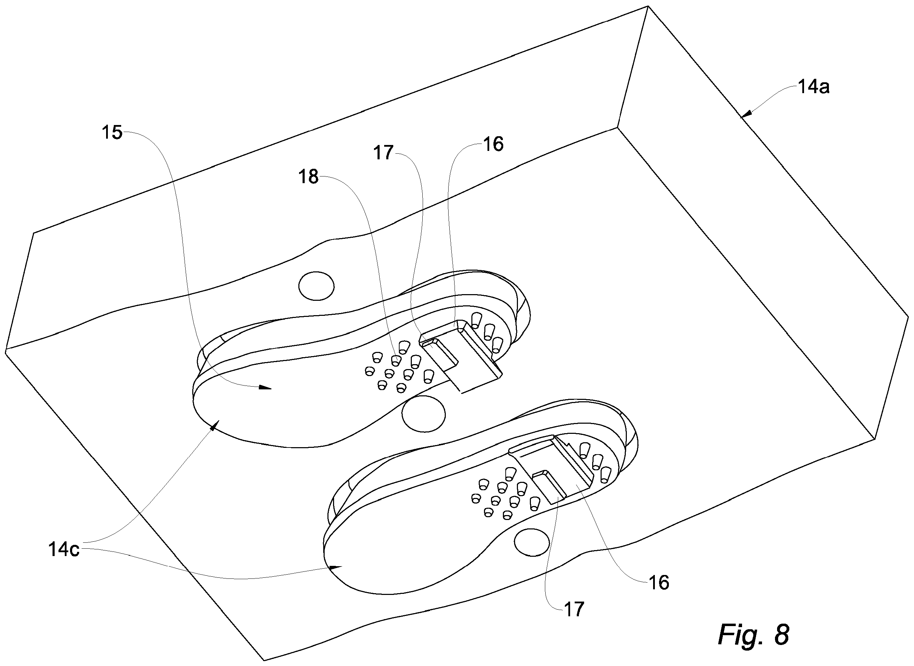

- Fig. 8 is a perspective view of a first mould half of the mould in Fig. 6.

### Preferred embodiment of the invention

In the figures, the reference numeral 1 indicates a sole for a shoe, the sole comprising a semi-finished main body 1b on which a main axis X which extends from a forefoot region 2 to a hindfoot region 4, a tread 5, a vertical axis Z that is perpendicular to the tread 5, and an upper surface 8 that is opposite to the tread 5 along the vertical axis Z are defined.

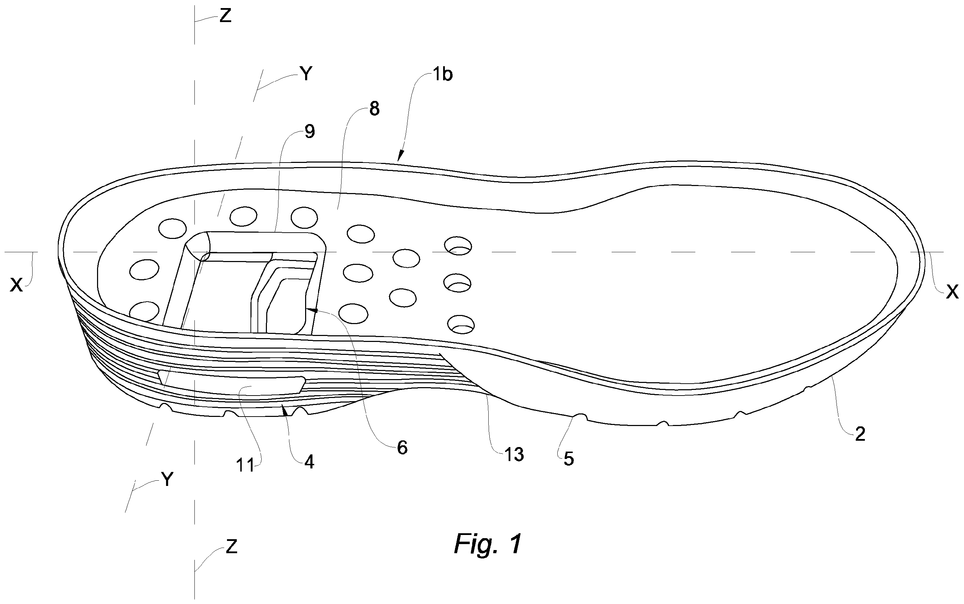

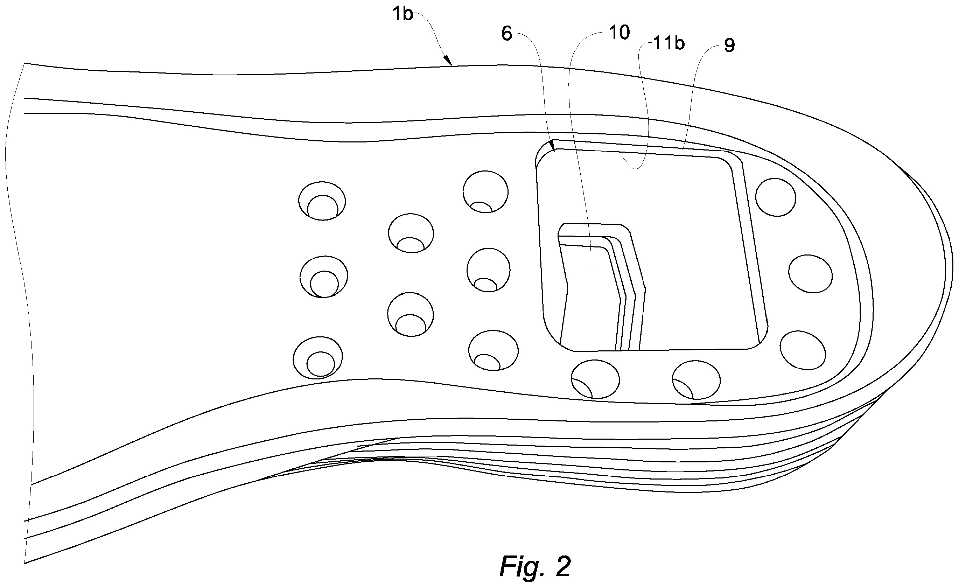

Preferably and with reference to Fig. 1, 2 and 4, a seat 6 suitable for receiving an insert 7 is indicated.

The insert 7 is a removable insert: this condition is produced by means of the features of the seat 6 and the insert 7 which are shaped so as to allow stable engagement between the insert 7 and the seat 6 (in particular during use by a user) and easier extraction of the insert 7 from the seat 6 when not being used by the user.

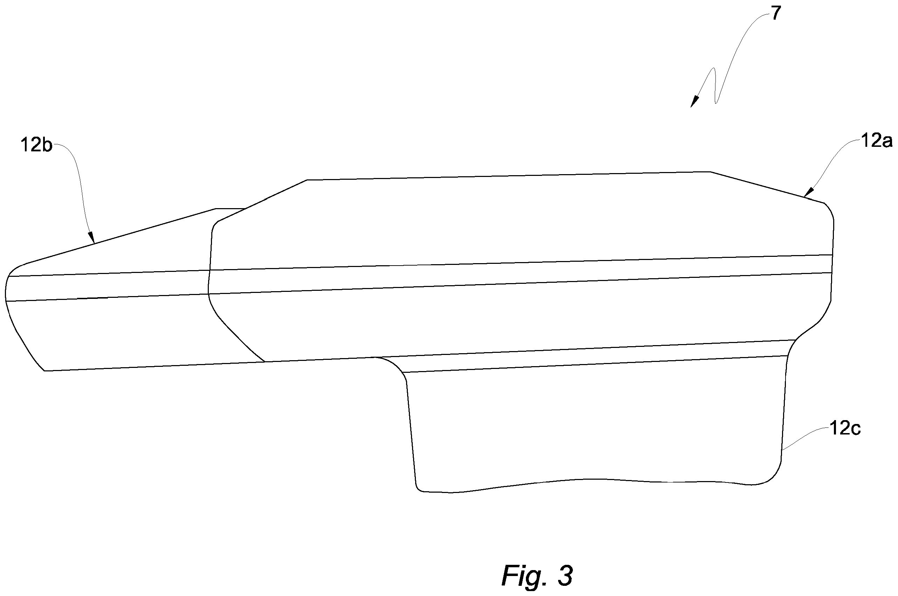

According to one embodiment as shown in Fig. 3, the insert 7 comprises a central portion 12a and a first projection 12b that projects out of the central portion 12a in a direction that is transverse to the vertical axis Z when the insert 7 is housed inside the seat 6.

The seat 6 advantageously comprises an upper entry hole 9, produced on the upper surface 8 and shaped so as to allow the insert 7 to pass therethrough and be housed inside the seat 6, and a transverse hole 11 which extends in a direction that is transverse to the vertical axis Z, closed above by a contact element 11b and shaped so as to contact the first projection 12b when the insert 7 is housed inside the seat 6 in order to prevent the first projection 12b from moving in said transverse hole 11 along the vertical axis Z.

The sole is preferably made of polymeric materials, for example ethyl vinyl acetate (EVA) or EVA with rubber filler, or similar technical solutions.

The insert is advantageously made of polymeric materials, for example copolymers of styrene butadiene styrene (SBS), mixed with antistatic material, or polyurethane (PU), mixed with antistatic material, or plasticised polyvinyl chloride (PVC), mixed with antistatic material, or SEBS (styrene ethylene butylene styrene), mixed with antistatic material, or TPU (thermoplastic polyurethane), mixed with antistatic material.

As previously mentioned, the invention produced according to the present invention comprises embodiments which are preferably used as safety shoes in that they allow continuous electric contact to be established between the foot of the user and the tread.

Moreover, this condition is necessary if an antistatic sole that complies with the various national and international standards is desired.

As a result of this design, in fact, it is possible to create continuous and stable contact between the foot of the user (when the sole is in use) and the ground, thereby allowing any electrical currents passing through the body of the user to discharge to earth.

With reference to Fig. 3, 4 and 5, the first projection 12b projects out of the central portion 12a in a direction that is perpendicular to the vertical axis Z when the insert 7 is housed inside the seat 6.

The insert comprises a second projection 12c that projects out of the central portion 12a in a direction that is parallel to the vertical axis Z and in a direction oriented towards the tread 5 when the insert 7 is housed inside the seat 6.

The seat 6 comprises a lower hole 10 which extends from the upper entry hole 9 towards the tread 5 until it intersects the tread and which is shaped so as to engagingly receive said second projection 12c when the insert 7 is housed inside said seat 6.

The central body 1b advantageously comprises a plurality of blind holes that are produced on the upper surface 8 and are suitable for lightening the aforementioned central body 1b and making it more deformable.

The central portion 12a and the second projection 12c extend so as to reinstate the upper surface 8 and the tread 5, respectively.

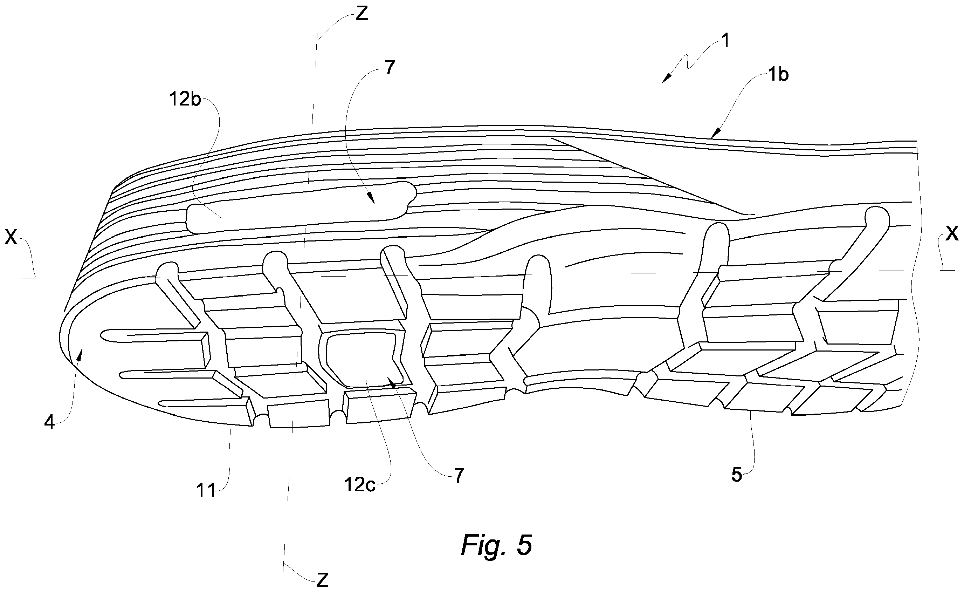

With reference to Fig. 1 or 5, the first projection 12b extends in width substantially similarly to the width of the central portion 12a. Alternatively, in the present invention the aforementioned first projection 12b can have a smaller width than the central portion 12a.

The transverse hole 11 preferably extends until it intersects a lateral surface 13 of the sole 1 and the first projection 12b of the insert 7 extends so as to reinstate the lateral surface 13.

The central portion 12a, the first projection 12b and the second projection 12c advantageously have a substantially parallelepiped box shape. Alternatively, these shapes can have more curved bases or three-dimensional extensions.

According to one embodiment, at least one of the upper entry hole 9, lower hole 10, transverse hole 11, central portion 12a, first projection 12b, second projection 12c and contact element 11b have rounded edges suitable for allowing or facilitating contacting parts to rotate relative to one another.

At least one of the contact element 11b and first projection 12b advantageously have rounded edges. This rounded edges preferably have curved transition surfaces.

The insert 7 is preferably made of antistatic material.

According to one embodiment shown in Fig. 1 and 5, the lower hole 10 is smaller than the lower entry hole 9. The lower hole 10 advantageously has a profile similar to a dovetail.

One embodiment not part of the present invention is directed to a mould 14 for moulding a semi-finished main body 1b of a sole 1, the mould comprising a first upper mould half 14a including a pair of upper casting moulds 14c for the semi-finished main body 1b. Each casting mould preferably comprises an upper contact surface 15 suitable for defining an upper surface 8 of a semi-finished central body 1b, a first element 16 projecting out of the upper contact surface 15 and suitable for defining an upper entry hole 9 in the semi-finished main body 1, and a second element 17, smaller in volume than the first element 16, projecting out of the first element 16 in a direction that is perpendicular to the upper contact surface 15.

The second element 17 advantageously has the main extent thereof oriented in a direction that is transverse with respect to a vertical axis Z and normal to the upper contact surface 15. According to one embodiment, the second element 17 extends, in the transverse direction, further than the first element 16.

The mould 14 preferably comprises a second lower mould half 14b including a pair of lower casting moulds 14d for the semi-finished main body 1b of a sole 1, each casting mould comprising a lower contact surface 20 suitable for defining a tread 5 of the semi-finished central body 1b, and a third element 21 projecting out of the lower contact surface 20 and suitable for defining a lower hole 10, connected to said upper entry hole 9 in said semi-finished main body 1.

Alternatively, the third element 21 can be produced in the first mould half 14a which defines said third element as projecting out of the second element 17.

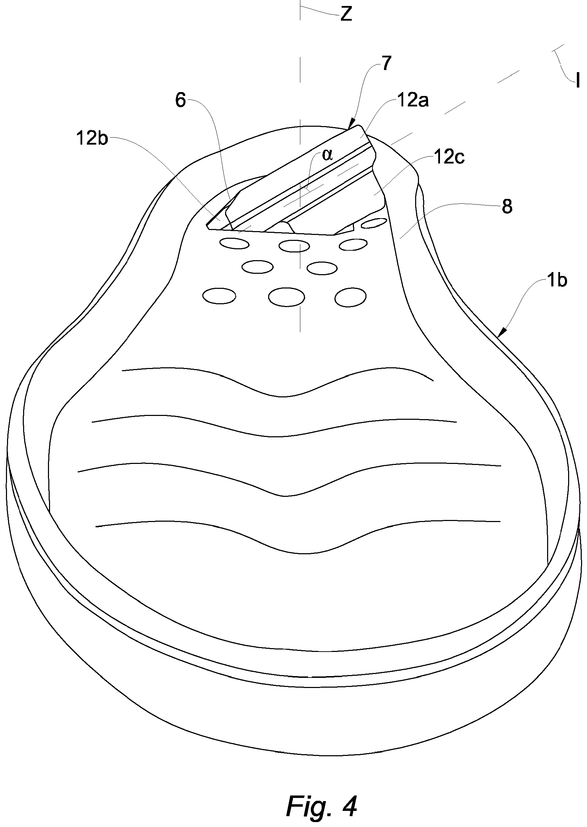

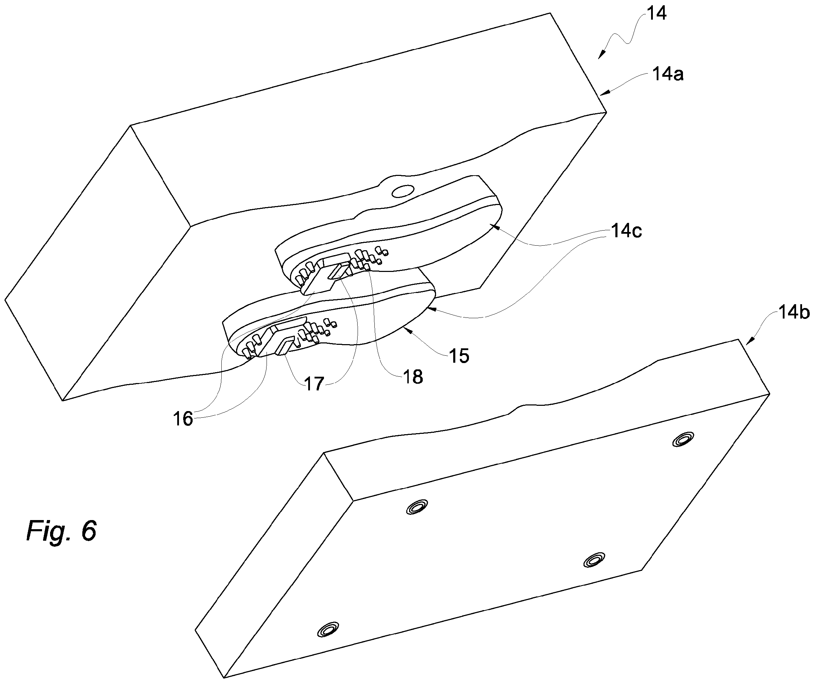

With reference to Fig. 4, 5 and 6, the mould 14 is preferably made of metal material. The mould is even more preferably made of aluminium, zamak, steel or similar technical solutions.

The mould 14 is advantageously made of a material that can be effectively used in processes for injection moulding polymeric material.

The operating modes for producing the inventions according to the present invention will become clearer from the process for producing a sole having at least one of the preceding claimed features, described in the following, the process comprising
a. preparing a mould 14 for the sole 1, the mould 14 comprising a first mould half 14a and a second mould half 14b, and injecting fluid or semi-solid plastics material into the mould 14, preferably within a temperature range which can vary from 85°C to 95°C, advantageously the mould together with the manufactured article inside being held closed for between 350 and 450 seconds at a temperature (defined as the baking temperature) which can vary between 350° and 450°,
b. opening the mould 14 and extracting, while hot, a polymeric semi-finished main body 1b which has been thus obtained and comprises a seat 6 which in turn includes an upper entry hole 9 and a transverse hole 11 that are interconnected and define a contact element 11b of the semi-finished main body 1b at the connection thereof,
c. preferably waiting for the semi-finished product 1b to expand at a maximum up to approximately 150% of the extraction size and identifying a main axis X oriented in a toe-to-heel direction of the semi-finished product 1b and a vertical axis Z that is perpendicular to the main axis X,
d. inserting in the semi-finished product 1b, in a transverse direction I inclined with respect to the vertical axis Z at an insertion angle a, a first portion of a casting mould into the upper entry hole 9 and the transverse hole 11 so as to contact the contact element 11b,
e. coupling, by applying a pressure in a direction that is parallel to the vertical axis Z and directed towards a tread 5 of the semi-finished central body 1b, the casting mould into the seat 6 so as to rotate said casting mould about the contact element 11b at an angle that is complementary to the insertion angle a.

The casting mould is advantageously made of a polymeric material, preferably a thermosetting material such as an acrylic or epoxide resin, etc.

With reference to Fig. 4, a step is shown in which the insert 7 is inserted into the seat 6, preferably at an insertion angle α equal to approximately 45°. According to one embodiment, the insertion angle α with respect to the vertical axis Z is between 30 and 60°.

One embodiment of the aforementioned method also includes
f. waiting for the semi-finished main body 1b which is coupled to the casting mould to cool,
g. extracting the casting mould while cold by applying the insertion steps d. and e. described above in reverse,
h. inserting, in the transverse direction I described in step d., a first projection 12b of an insert 7 into the upper entry hole 9 and the transverse hole 11 so as to bring a central portion 12a into contact with the contact element 11b,
i. coupling, by applying a pressure in a direction described in step e., the insert 7 into the seat 6 by rotating said insert about the contact element 11b at an angle that is complementary to the angle α so as to bring the first projection 12b and second projection 12a to reinstate continuity of the lateral surface 13 and the tread 5 to obtain the sole 1.

In this context, the temperature that is considered to be the cooling temperature of the product is approximately less than 50°C, preferably close to the ambient temperature of the workshop.

According to one embodiment, the fluid or semi-solid plastics material injected into the mould 14 is EVA.

According to one embodiment, on the basis of the compactness and lightness that the semi-finished central body 1b is intended to have, a development/embodiment thereof which allows it to expand outside of the mould to between 120% and 170% of the initial extraction size is provided.

The semi-finished central body 1b preferably expands at a maximum up to approximately 130% of the extraction size.

## Claims

1. Sole (1) for a shoe, comprising
a.-a semi-finished main body (1b) on which the following are defined
b.-a main axis (X) which extends from a forefoot region (2) to a hindfoot region (4),
c.-a tread (5), a vertical axis (Z) that is perpendicular to said tread (5), and an upper surface (8) that is opposite to said tread (5) along said vertical axis (Z),
d.-a seat (6) suitable for receiving an insert (7),
e.-said insert (7) comprising a central portion (12a),
f.-said insert (7) comprises a first projection (12b) that projects out of said central portion (12a) in a direction that is transverse to said vertical axis (Z) when said insert (7) is housed inside said seat (6),
g.- said seat (6) comprising an upper entry hole (9), produced on said upper surface (8) and shaped so as to allow said insert (7) to pass therethrough and be removably housed inside said seat (6), and a transverse hole (11) which extends in a direction that is transverse to said vertical axis (Z), closed above by a contact element (11b) and shaped so as to contact said first projection (12b) when said insert (7) is housed inside said seat (6) in order to prevent said first projection (12b) from moving in said transverse hole (11) along said vertical axis (Z),
**characterized in that**
h. -said insert comprises a second projection (12c) which projects out of said central portion (12a) in a direction that is parallel to said vertical axis (Z) and in a direction oriented towards said tread (5) when said insert (7) is housed inside said seat (6),
i. -said seat (6) comprises a lower hole (10) which extends from said upper entry hole (9) towards said tread (5) until it intersects said tread and which is shaped so as to engagingly receive said second projection (12c) when said insert (7) is housed inside said seat (6),
l. -wherein said central portion (12a) and said second projection (12c) extend so as to reinstate said upper surface (8) and said tread (5), respectively,
m. -wherein said insert (7) is made of antistatic material.

2. Sole according to claim 1, wherein said first projection (12b) projects out of said central portion (12a) in a direction that is perpendicular to said vertical axis (Z) when said insert (7) is housed inside said seat (6).

3. Sole according to any one of the preceding claims, wherein said transverse hole (11) extends until it intersects a lateral surface (13) of said sole (1) and said first projection (12b) of said insert (7) extends so as to reinstate said lateral surface (13).

4. Sole according to any one of the preceding claims, wherein at least one of said upper entry hole (9), lower hole (10), transverse hole (11), central portion (12a), first projection (12b) and second projection (12c) have rounded edges suitable for allowing or facilitating contacting parts to rotate relative to one another.

5. Method for producing a sole (1) having the features of any one of claims 1 to 4, the method comprising
a.preparing a mould (14) for said sole (1), said mould (14) comprising a first mould half (14a) and a second mould half (14b), and injecting fluid or semi-solid plastics material into said mould (14),
b.opening said mould (14) and extracting, while hot, a polymeric semi-finished main body (1b) which has been thus obtained and comprises a seat (6) which in turn includes an upper entry hole (9) and a transverse hole (11) that are interconnected and define a contact element (11b) of said semi-finished main body (1b) at the connection thereof,
c.waiting for said semi-finished product (1b) to expand at a maximum up to approximately 150% of the extraction size and identifying a main axis (X) oriented in a toe-to-heel direction of said semi-finished product (1b) and a vertical axis (Z) that is perpendicular to said main axis (X),
d.inserting in said semi-finished product (1b), in a transverse direction (I) inclined with respect to said vertical axis (Z) at an insertion angle (α), a first portion of a casting mould into said upper entry hole (9) and said transverse hole (11) so as to contact said contact element (11b),
e.coupling, by applying a pressure in a direction that is parallel to said vertical axis (Z) and directed towards a tread (5) of said semi-finished central body (1b), said casting mould into said seat (6) so as to rotate said casting mould about said contact element (11b) at an angle that is complementary to said insertion angle (α),
f.waiting for said semi-finished main body (1b) which is coupled to said casting mould to cool,
g.extracting said casting mould while cold by applying the insertion steps d. and e. described above in reverse,
h.inserting, in said transverse direction (I) described in step d., a first projection (12b) of an insert (7) into said upper entry hole (9) and said transverse hole (11) so as to bring a central portion (12a) into contact with said contact element (11b),
i.coupling, by applying a pressure in a direction described in step e., said insert (7) into said seat (6) by rotating said insert about said contact element (11b) at an angle that is complementary to said angle (α) so as to bring said first projection (12b) and second projection (12a) to reinstate continuity of the lateral surface (13) and said tread (5) to obtain said sole (1).

6. Method according to claim 5, wherein said fluid or semi-solid plastics material injected into said mould (14) is EVA.

7. Method according to either claim 5 or claim 6, wherein said semi-finished central body (1b) expands at maximum up to approximately 130% of the extraction size.

## Patentansprüche

1. Sohle (1) für einen Schuh, umfassend:
a. einen halbfertigen Hauptkörper (1b), an dem Folgendes definiert ist:
b. eine Hauptachse (X), die sich von einem Vorderfußbereich (2) zu einem Hinterfußbereich (4) erstreckt,
c. eine Lauffläche (5), eine vertikale Achse (Z), die senkrecht zur Lauffläche (5) verläuft, und eine Oberseite (8), die der Lauffläche (5) entlang der vertikalen Achse (Z) gegenüberliegt,
d. einen Sitz (6), der zum Aufnehmen eines Einsatzes (7) geeignet ist,
e. wobei der Einsatz (7), einen Mittelbereich (12a) umfasst,
f. der Einsatz (7) einen ersten Vorsprung (12b) umfasst, der vom Mittelbereich (12a) in einer Richtung vorragt, die quer zur vertikalen Achse (Z) verläuft, wenn der Einsatz (7) im Innern des Sitzes (6) untergebracht ist,
g. wobei der Sitz (6) eine obere Eintrittsöffnung (9), die auf der Oberseite (8) hergestellt ist und so geformt ist, dass der Einsatz (7) durch diese hindurchtreten und im Sitz (6) entfernbar untergebracht werden kann, und eine querverlaufende Öffnung (11) umfasst, die sich in eine Richtung erstreckt, die quer zur vertikalen Achse (Z) verläuft, oben durch ein Kontaktelement (11b) geschlossen ist, und zum Berühren des ersten Vorsprungs (12b) geformt ist, wenn der Einsatz (7) im Innern des Sitzes (6) untergebracht ist, um zu verhindern, dass sich der erste Vorsprung (12b) in der querverlaufenden Öffnung (11) entlang der vertikalen Achse (Z) bewegt,
**dadurch gekennzeichnet, dass**
h. der Einsatz (7) einen zweiten Vorsprung (12c) umfasst, der vom Mittelbereich (12a) in einer Richtung, die parallel zur vertikalen Achse (Z) verläuft, und in einer Richtung vorragt, die in Richtung der Lauffläche (5) ausgerichtet ist, wenn der Einsatz (7) im Innern des Sitzes (6) untergebracht ist,
i. der Sitz (6) eine untere Öffnung (10) umfasst, die sich von der oberen Eintrittsöffnung (9) in Richtung der Lauffläche (5) erstreckt, bis diese die Lauffläche schneidet, und die zum einrastenden Aufnehmen des zweiten Vorsprungs (12c) geformt ist, wenn der Einsatz (7) im Innern des Sitzes (6) untergebracht ist,
l. wobei sich der Mittelbereich (12a) und der zweite Vorsprung (12c) jeweils so erstrecken, dass die Oberseite (8) und die Lauffläche (5) wiederhergestellt sind,
m. wobei der Einsatz (7) aus antistatischem Material hergestellt ist.

2. Sohle nach Anspruch 1, wobei der erste Vorsprung (12b) aus dem Mittelbereich (12a) in einer Richtung vorragt, die senkrecht zur vertikalen Achse (Z) verläuft, wenn der Einsatz (7) im Innern des Sitzes (6) untergebracht ist.

3. Sohle nach einem der vorhergehenden Ansprüche, wobei sich die querverlaufende Öffnung (11) so erstreckt, bis diese eine Seitenfläche (13) der Sohle (1) schneidet, und sich der erste Vorsprung (12b) des Einsatzes (7) so erstreckt, dass die Seitenfläche (13) wiederhergestellt ist.

4. Sohle nach einem der vorhergehenden Ansprüche, wobei die obere Eintrittsöffnung (9), die untere Eintrittsöffnung (10), die querverlaufende Öffnung (11), der Mittelbereich (12a), der erste Vorsprung (12b) und/oder der zweite Vorsprung (12c) abgerundete Ränder aufweisen, die zum Ermöglichen oder Erleichtern eines Drehens sich berührender Teile relativ zueinander geeignet sind.

5. Verfahren zum Herstellen einer Sohle (1) mit den Merkmalen eines der Ansprüche 1 bis 4, wobei das Verfahren folgende Schritte umfasst:
a. Anfertigen einer Form (14) für die Sohle (1), wobei die Form (14) eine erste Formhälfte (14a) und eine zweite Formhälfte (14b) umfasst, und Einspritzen eines flüssigen oder halbfesten Kunststoffmaterials in die Form (14),
b. Öffnen der Form (14) und Entnehmen eines polymeren, halbfertigen Hauptkörpers (1b) in heißem Zustand, der auf diese Weise erhaltenen wurde und einen Sitz (6) umfasst, der seinerseits eine obere Eintrittsöffnung (9) und eine querverlaufende Öffnung (11) umfasst, die miteinander verbunden sind und ein Kontaktelement (11b) des halbfertigen Hauptkörpers (1b) an deren Verbindung definieren,
c. Warten, bis sich das halbfertige Produkt (1b) maximal bis zu etwa 150 % der Extraktionsgröße ausdehnt, und Identifizieren einer Hauptachse (X), die in Zehen-Fersen-Richtung des halbfertigen Produkts (1b) ausgerichtet ist, und einer vertikalen Achse (Z), die senkrecht zur Hauptachse (X) verläuft,
d. Einführen eines ersten Bereichs einer Gussform in die obere Eintrittsöffnung (9) und die querverlaufende Öffnung (11) in das halbfertige Produkt (1b) in einer Querrichtung (I), die in Bezug auf die vertikale Achse (Z) unter einem Einführwinkel (a) geneigt ist, um das Kontaktelement (11b) zu berühren,
e. Befestigen der Gussform im Sitz (6) durch Aufbringen eines Drucks in einer Richtung, die parallel zur vertikalen Achse (Z) verläuft und auf eine Lauffläche (5) des halbfertigen Mittelkörpers (1b) gerichtet ist, um die Gussform um das Kontaktelement (11b) in einem Winkel zu drehen, der zum Einführwinkel (a) komplementär ist.
f. Warten, bis der mit der Gussform verankerte halbfertige Hauptkörper (1b) abgekühlt ist,
g. Entnehmen der Gussform in kaltem Zustand durch Anwenden der oben beschriebenen Einführschritte d. und e in umgekehrter Reihenfolge,
h. Einsetzen eines ersten Vorsprungs (12b) eines Einsatzes (7) in die obere Eingangsöffnung (9) und die querverlaufende Öffnung (11), in der im Schritt d. beschriebenen querverlaufenden Richtung (I), um einen Mittelbereich (12a) in Kontakt mit dem Kontaktelement (11b) zu bringen,
i. Befestigen des Einsatzes (7), durch Aufbringen eines Drucks in einer im Schritt e beschriebenen Richtung, im Sitz (6) durch Drehen des Einsatzes um das Kontaktelement (11b) in einem Winkel, der zum Winkel (a) komplementär ist, sodass der erste Vorsprung (12b) und der zweite Vorsprung (12a) die Kontinuität der Seitenfläche (13) und der Lauffläche (5) zum Erhalten der Sohle (1) wiederherstellt.

6. Verfahren nach Anspruch 5, wobei das in die Form (14) eingespritzte flüssige oder halbfeste Kunststoffmaterial EVA ist.

7. Verfahren nach Anspruch 5 oder 6, wobei sich der halbfertige Hauptkörper (1b) maximal bis zu etwa 130% der Extraktionsgröße ausdehnt.

## Revendications

1. Semelle (1) pour une chaussure comprenant :
a. un corps principal semi-fini (1b) sur lequel les éléments suivants sont définis :
b. un axe principal (X) qui s'étend d'une région d'avant-pied (2) à une région de pied arrière (4),
c. une semelle extérieure (5), un axe vertical (Z) qui est perpendiculaire à ladite semelle extérieure (5), et une surface supérieure (8) qui est opposée à ladite semelle extérieure (5) le long dudit axe vertical (Z),
d. un siège (6) approprié pour recevoir un insert (7),
e. ledit insert (7) comprenant une partie centrale (12a),
f. ledit insert (7) comprend une première saillie (12b) qui fait saillie hors de ladite partie centrale (12a) dans une direction qui est transversale audit axe vertical (Z) lorsque ledit insert (7) est logé à l'intérieur dudit siège (6),
g. ledit siège (6) comprenant un trou d'entrée supérieur (9), produit sur ladite surface supérieure (8) et formé afin de permettre audit insert (7) de passer à travers ce dernier et être logé, de manière amovible, à l'intérieur dudit siège (6), et un trou transversal (11) qui s'étend dans une direction qui est transversale par rapport audit axe vertical (Z), fermé au-dessus par un élément de contact (11b) et formé afin d'être en contact avec ladite première saillie (12b) lorsque ledit insert (7) est logé à l'intérieur dudit siège (6) afin d'empêcher le déplacement de ladite première saillie (12b) dans ledit trou transversal (11) le long dudit axe vertical (Z),
**caractérisée en ce que** :
h. ledit insert comprend une seconde saillie (12c) qui fait saillie hors de ladite partie centrale (12a) dans une direction qui est parallèle audit axe vertical (Z) et dans une direction orientée vers ladite semelle extérieure (5), lorsque ledit insert (7) est logé à l'intérieur dudit siège (6),
i. ledit siège (6) comprend un trou inférieur (10) qui s'étend à partir dudit trou d'entrée supérieur (9) vers ladite semelle extérieure (5) jusqu'à ce qu'il coupe ladite semelle extérieure et qui est formé afin de recevoir, par mise en prise, ladite seconde saillie (12c) lorsque ledit insert (7) est logé à l'intérieur dudit siège (6),
1. dans laquelle ladite partie centrale (12a) et ladite seconde saillie (12c) s'étendent afin de réinstaller ladite surface supérieure (8) et ladite semelle extérieure (5) respectivement,
m. dans laquelle ledit insert (7) est réalisé avec un matériau antistatique.

2. Semelle selon la revendication 1, dans laquelle ladite première saillie (12b) fait saillie hors de ladite partie centrale (12a) dans une direction qui est perpendiculaire audit axe vertical (Z) lorsque ledit insert (7) est logé à l'intérieur dudit siège (6).

3. Semelle selon l'une quelconque des revendications précédentes, dans laquelle ledit trou transversal (11) s'étend jusqu'à ce qu'il coupe une surface latérale (13) dudit trou (1) et ladite première saillie (12b) dudit insert (7) s'étend afin de réinstaller ladite surface latérale (13).

4. Semelle selon l'une quelconque des revendications précédentes, dans laquelle au moins l'un parmi ledit trou d'entrée supérieur (9), le trou inférieur (10), le trou transversal (11), la partie centrale (12a), la première saillie (12b) et la seconde saillie (12c) a des bords arrondis appropriés pour permettre ou faciliter la rotation des parties de contact les unes par rapport aux autres.

5. Procédé pour produire une semelle (1) ayant les caractéristiques selon l'une quelconque des revendications 1 à 4, le procédé comprenant les étapes consistant à :
a. préparer un moule (14) pour ladite semelle (1), ledit moule (14) comprenant un premier demi-moule (14a) et un second demi-moule (14b), et injecter une matière plastique fluide ou semi-solide dans ledit moule (14),
b. ouvrir ledit moule (14) et extraire, lorsqu'il est chaud, un corps principal semi-fini polymère (1b) qui a été ainsi obtenu et comprend un siège (6) qui comprend, à son tour, un trou d'entrée supérieur (9) et un trou transversal (11) qui sont interconnectés et définissent un élément de contact (11b) dudit corps principal semi-fini (1b) au niveau de leur raccordement,
c. attendre que ledit produit semi-fini (1b) se dilate à un maximum jusqu'à approximativement 150% de la taille d'extraction et identifier un axe principal (X) orienté dans la direction de la pointe au talon dudit produit semi-fini (1b) et un axe vertical (Z) qui est perpendiculaire audit axe principal (X),
d. insérer dans ledit produit semi-fini (1b), dans une direction transversale (I) inclinée par rapport audit axe vertical (Z) au niveau d'un angle d'insertion (α), une première partie d'un moule de moulage dans ledit trou d'entrée supérieur (9) et ledit trou transversal (11) afin d'être en contact avec ledit élément de contact (11b),
e. coupler, en appliquant une pression dans une direction qui est parallèle audit axe vertical (Z) et dirigée vers une semelle extérieure (5) dudit corps central semi-fini (1b), ledit moule de moulage dans ledit siège (6) afin de faire tourner ledit moule de moulage autour dudit élément de contact (11b) à un angle qui est complémentaire par rapport audit angle d'insertion (α),
f. attendre que ledit corps principal semi-fini (1b), qui est couplé audit moule de moulage, refroidisse,
g. extraire ledit moule de moulage lorsqu'il est froid, en appliquant les étapes d'insertion d et e décrites ci-dessus dans l'ordre inverse,
h. insérer, dans ladite direction transversale (I) décrite à l'étape d, une première saillie (12b) d'un insert (7) dans ledit trou d'entrée supérieur (9) et ledit trou transversal (11) afin d'amener une partie centrale (12a) en contact avec ledit élément de contact (11b),
i. coupler, en appliquant une pression dans une direction décrite à l'étape e, ledit insert (7) dans ledit siège (6) en faisant tourner ledit insert autour dudit élément de contact (11b) à un angle qui est complémentaire dudit angle (a) afin d'amener ladite première saillie (12b) et la seconde saillie (12a) à rétablir la continuité de la surface latérale (13) et de ladite semelle extérieure (5) afin d'obtenir ladite semelle (1).

6. Procédé selon la revendication 5, dans lequel ladite matière plastique fluide ou semi-solide injectée dans ledit moule (14) est de l'EVA.

7. Procédé selon la revendication 5 ou la revendication 6, dans lequel ledit corps central semi-fini (1b) se dilate jusqu'à un maximum d'approximativement 130% de la taille d'extraction.
